# EUROPÄISCHE PATENTSCHRIFT

(11) **EP 3 051 115 B1**
(45) Veröffentlichungstag und Bekanntmachung des Hinweises auf die Patenterteilung: **14.02.2018**
(21) Anmeldenummer: 15003589.7
(22) Anmeldetag: 16.12.2015
(51) Int. Cl.: F02M 31/125, F02M 37/00, F02D 33/00, F02M 31/20

(54) **TEMPERIERUNGSVORRICHTUNG FÜR EIN KRAFTSTOFFVERSORGUNGSSYSTEM EINES KRAFTFAHRZEUGS**
TEMPERING DEVICE FOR A FUEL SUPPLY SYSTEM OF A MOTOR VEHICLE
DISPOSITIF D'EQUILIBRAGE DES TEMPERATURES POUR UN SYSTEME D'ALIMENTATION EN CARBURANT D'UN VEHICULE AUTOMOBILE

(30) Priorität: 29.01.2015 DE 102015001070
(43) Veröffentlichungstag der Anmeldung: 03.08.2016
(73) Patentinhaber: MAN Truck & Bus AG, 80995 München (DE)
(72) Erfinder: Gutzeit, Reinhard, 82049 Pullach (DE)
(74) Vertreter: v. Bezold & Partner Patentanwälte - PartG mbB

(56) Entgegenhaltungen:
- EP-A1- 1 956 670
- DE-A1- 19 631 981
- DE-A1-102007 005 876
- US-A- 5 042 447
- US-A1- 2013 284 156

## Beschreibung

Die Erfindung betrifft eine Temperierungsvorrichtung für ein Kraftstoffversorgungssystem eines Kraftfahrzeugs, insbesondere eines Nutzfahrzeugs, sowie ein Kraftfahrzeug mit einer solchen Temperierungsvorrichtung.

Die Temperierung von Kraftstoffen ist beispielsweise bei Dieselkraftstoffen bekannt, da der Dieselkraftstoff bei niedrigen Temperaturen dazu neigt, zu versulzen. Um auch im Winter Startprobleme bei dieselkraftstoffbetriebenen Kraftfahrzeugen zu vermeiden, ist der Einbau von sogenannten Dieselheizungen üblich. Diese Dieselheizungen sind oftmals als Elektroheizung ausgebildet, die über eine Heizspirale oder dergleichen den Dieselkraftstoff bei Bedarf erwärmen.

Aus der Offenlegungsschrift DE 35 02 251 A1 ist ferner bekannt, eine gemessene Kraftstoffvorlauftemperatur mit einer gegebenen Kraftstoffvorlauftemperatur zu vergleichen und in Abhängigkeit vom Vergleich die Temperatur des Kraftstoffs an die vorgegebene Kraftstofftemperatur anzupassen, wobei der Kraftstoff über einen Wärmetauscher aufgeheizt wird, der von der Abwärme des Motors oder einer anderen Wärmequelle (z. B. elektrische Aufheizung) beaufschlagt ist. Nachteilig hieran ist, dass bei einer zu starken Erwärmung des Kraftstoffes keine Möglichkeit besteht, diesen aktiv auf die vorgegebene Kraftstofftemperatur abzukühlen. Jedoch kann nicht nur ein zu kalter Kraftstoff zu Problemen im Kraftstoffversorgungssystem führen, sondern auch ein warmer bzw. zu warmer Kraftstoff. Beispielsweise wird Dieselkraftstoff von seinem Weg vom Tank bis zum Eintritt in den Verbrennungsraum des Kraftfahrzeuges erwärmt, wobei die Wärme von der Umwelt, insbesondere in Heißländern, aber auch vom Motor geliefert wird. Ein weiterer Temperaturanstieg ist durch die innere Reibung im Pumpensystem bedingt. Als direkte Folge der gestiegenen Dieselkraftstofftemperatur werden auch die Bauteile des Kraftstoffversorgungssystems erwärmt, die mit dem Dieselkraftstoff in thermischem Kontakt stehen, und dehnen sich aufgrund der Temperaturerhöhung aus, was zu Funktionsverschlechterungen oder -ausfällen in den zugehörigen Baugruppen führen kann.

Zur Lösung dieses Problems schlägt die Offenlegungsschrift DE 10 2007 005 876 A1 ein Temperierungsmodul für ein Kraftstoffversorgungssystem in einem Kraftfahrzeug vor, aufweisend eine Temperierungsstrecke zwischen Kraftstoffeinlass und Kraftstoffauslass, wobei die Temperierungsstrecke mit einer Peltiervorrichtung thermisch gekoppelt ist. Eine Peltiervorrichtung kann grundsätzlich je nach Bestromungsrichtung sowohl zur Kühlung als auch zur Erwärmung des Kraftstoffes genutzt werden. Um jedoch eine um einen Sollwert schwankende Kraftstofftemperatur auf den Sollwert einzuregeln, kann es je nach Vorzeichen der Abweichung vom Sollwert notwendig sein, schnell von einer Kraftstoffkühlung auf eine Kraftstofferwärmung und vice versa umzuschalten. Zwar kann der Betrieb einer Peltiervorrichtung durch Umpolung schnell von Kühlbetrieb auf Heizbetrieb und vice versa umgeschaltet werden, jedoch dauert es vergleichsweise lange, bis sich eine Kühlseite nach der Umpolung wieder ausreichend stark über die Kraftstofftemperatur erwärmt hat. Das in der DE 10 2007 005 876 A1 offenbarte Temperierungsmodul ist somit ungeeignet, falls in kurzer Zeitabfolge sowohl eine Kühlleistung als auch eine Heizleistung zur Kraftstofftemperierung benötigt wird;

Es ist somit eine Aufgabe der Erfindung, eine verbesserte Temperierungsvorrichtung für ein Kraftstoffversorgungssystem eines Kraftfahrzeugs bereitzustellen, mit der Nachteile herkömmlicher Techniken vermieden werden können. Die Aufgabe der Erfindung ist es insbesondere, eine solche Temperierungsvorrichtung bereitzustellen, mit der Kraftstoff effizient gekühlt und erwärmt werden kann, um den Kraftstoff auf eine vorgegebene Solltemperatur einzuregeln.

Diese Aufgaben werden durch eine Temperierungsvorrichtung mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Temperierungsvorrichtung für ein Kraftstoffversorgungssystem eines Kraftfahrzeugs, umfassend einen Kraftstoffeinlass und einen Kraftstoffauslass, vorgeschlagen. Gemäß allgemeinen Gesichtspunkten der Erfindung umfasst die Temperierungsvorrichtung eine erste Temperierungsstrecke zwischen Kraftstoffeinlass und Kraftstoffauslass, die mit einer Peltiervorrichtung thermisch gekoppelt ist, sowie eine zweite Temperierungsstrecke zwischen Kraftstoffeinlass und Kraftstoffauslass, die mit einem Kühlkreislauf einer Brennkraftmaschine des Kraftfahrzeugs thermisch gekoppelt ist. Die Temperierungsvorrichtung umfasst ferner ein schaltbares Steuerventil, das eingangsseitig mit dem Kraftstoffeinlass verbunden ist und den Kraftstoffeinlass in einer ersten Schaltstellung mit der ersten Temperierungsstrecke und in einer zweiten Schaltstellung mit der zweiten Temperierungsstrecke verbindet.

Die Temperierungsvorrichtung weist somit einen ersten Strömungszweig für den Kraftstoff, der die erste Temperierungsstrecke enthält und der einen ersten Ausgang des Steuerventils mit dem Kraftstoffauslass verbindet, sowie einen zweiten Strömungszweig für den Kraftstoff, der die zweite Temperierungsstrecke enthält und der einen zweiten Ausgang des Steuerventils mit dem Kraftstoffauslass verbindet, auf. Der Kraftstoff kann somit je nach Schaltstellung des Steuerventils wahlweise über den ersten Strömungszweig bzw. zur ersten Temperierungsstrecke geleitet werden, um mit der Peltiervorrichtung gekühlt (oder ggf. auch erwärmt) zu werden, oder über den zweiten Strömungszweig bzw. zur zweiten Temperierungsstrecke geleitet werden, um über den Kühlkreislauf des Motors, der mit Abwärme des Motors beaufschlagt ist, erwärmt zu werden. Dadurch kann schnell zwischen einem Kühl- und einem Heizbetrieb hin- und hergewechselt werden.

Gemäß einer bevorzugten Ausführungsform umfasst die Temperierungsvorrichtung ferner eine Steuereinrichtung, die ausgebildet ist, das schaltbare Steuerventil und die Peltiervorrichtung zum Einregeln der Kraftstofftemperatur auf einen vorgegebenen Sollwert und/oder Sollwertbereich anzusteuern. Die Steuervorrichtung ist hierbei ausgeführt, bei betriebswarmer Brennkraftmaschine und zur Reduzierung der Kraftstofftemperatur das Steuerventil in die erste Schaltstellung zu schalten und die Peltiervorrichtung als Kühlvorrichtung zu bestromen oder, falls die Umgebungstemperatur einen vorbestimmten Schwellenwert unterschreitet, stromlos zu schalten. Die Steuervorrichtung ist gemäß dieser Ausführungsform ferner ausgeführt, bei betriebswarmer Brennkraftmaschine und zur Erhöhung der Kraftstofftemperatur das Steuerventil in die zweite Schaltstellung zu schalten. Mit anderen Worten wird bei betriebswarmer Brennkraftmaschine der Kraftstoff bei Durchlaufen der ersten Temperierungsstrecke gekühlt und bei Durchlaufen der zweiten Temperierungsstrecke erwärmt, so dass sowohl zu warmer als auch zu kalter Kraftstoff schnell auf den Sollwert eingeregelt werden kann.

Die Regelung bzw. die Steuervorrichtung sind vorzugsweise so ausgeführt, dass eine Stärke der Bestromung des Peltierelements mit zunehmender Abweichung der Kraftstofftemperatur von dem vorgegebenen Sollwert zunimmt, so dass eine die Kühlleistung bzw. Heizleistung an die Abweichung vom Sollwert angepasst wird. Ferner besteht die Möglichkeit, für die Regelung auch mehrere Solltemperaturen für die Kraftstofftemperatur vorzugeben, die aufgrund unterschiedlicher Motorbetriebs-/lastzustände gefordert sind.

Gemäß einer weiteren Ausgestaltungsform kann die Steuervorrichtung ausgeführt sein, bei kalter Brennkraftmaschine und zur Erhöhung der Kraftstofftemperatur das Steuerventil in die erste Schaltstellung zu schalten oder in der ersten Schaltstellung zu belassen und die Peltiervorrichtung mit Stromumkehr, d. h. durch Umpolung der angelegten Spannung, als Heizaggregat zu bestromen. Dies ermöglicht die schnelle Erwärmung des Kraftstoffs, wenn während der Kaltstartphase und Warmlaufphase des Motors im Motorkühlkreislauf noch keine oder nicht genügend Abwärme vorhanden ist, um den Kraftstoff über die zweite Temperierungsstrecke zu erwärmen.

Bei einem bevorzugten Ausführungsbeispiel ist an der im Kühlbetrieb warmen Seite der Peltiervorrichtung ein Temperierkörper angeordnet ist, der mit einem von einem Kühlfluid durchströmbaren Niedertemperaturkühlkreislauf thermisch gekoppelt ist. Dies ermöglicht einen effizienten Abtransport der beim Kühlvorgang erzeugten Wärme. Im Kühlbetrieb der Peltiervorrichtung wird diese so bestromt, dass die Kaltseite der Peltiervorrichtung der ersten Temperierungsstrecke zugewandt ist, während die Warmseite auf der von der ersten Temperierungsstrecke abgewandten Seite der Peltiervorrichtung liegt.

Bei einer vorteilhaften Variante dieses Ausführungsbeispiels umfasst der Niedertemperaturkühlkreislauf eine Kühlfluidkanalführung, in der ein Kühlfluid zirkulieren kann, eine Pumpe zum Umwälzen des Kühlfluids im Niedertemperaturkühlkreislauf und einen Niedertemperaturkühler.

Hierbei kann ein im Temperierkörper verlaufender Abschnitt der Kühlfluidkanalführung vorzugsweise mäanderförmig, schlangenförmig und/oder zickzackförmig verlaufend ausgebildet sein, so dass die Strecke des Kühlfluidskanals im Innern des Temperierkörpers im Gegensatz zu einem geraden bzw. linearen Verlauf künstlich verlängert ist.

Das schaltbare Steuerventil kann ein elektrisch ansteuerbares 3/2-Magnetventil, insbesondere ein 3/2-Niederdruck-Magnetventil, sein. Das schaltbare Steuerventil kann auch als Niederdruck-3/2-Proportionalventil ausgeführt sein, um eine kontinuierliche und genauere Regelung zu ermöglichen. Bei Verwendung eines Proportionalregelventils können wegen der kontinuierlichen Teilströme ferner sehr enge Regelgrenzen eingehalten werden.

Es ist ferner vorteilhaft, die erste Temperierungsstrecke so auszuführen, dass sie in einem Temperierkörper aus einem wärmeleitfähigen, vorzugsweise einem stark wärmeleitfähigen Material, z. B. in einem Aluminiumblock, verläuft, der an der im Kühlbetrieb kalten Seite bzw. der im Heizbetrieb warmen Seite der Peltiervorrichtung angeordnet ist. Ferner ist es wiederum vorteilhaft, die erste Temperierungstrecke mäanderförmig, schlangenförmig und/oder zickzackförmig verlaufend auszubilden.

Im Rahmen der Erfindung besteht die Möglichkeit, dass die Temperierungsvorrichtung vollständig oder zumindest teilweise von einer thermischen Isolierung umgeben ist, um die Solltemperatur mit besserem Wirkungsgrad und ohne äußere Temperatureinflüsse zu erreichen.

Ferner kann die Peltiervorrichtung zum Schutz vor Fahrzeug- und/oder Motorschwingungen schwingungsgedämpft gelagert sein.

Die Erfindung betrifft ferner ein Kraftfahrzeug, insbesondere ein Nutzfahrzeug mit einer Temperierungsvorrichtung, wie hierin offenbart. Es ist vorteilhaft, die Temperierungsvorrichtung stromauf und vorzugsweise in der Nähe einer Kraftstoffhochdruckpumpe eines Common-Rail-Einspritzsystems der Brennkraftmaschine anzuordnen, um Temperatureinflüsse bedingt durch die Wärmeabstrahlung der Brennkraftmaschine möglichst gering zu halten.

Im Rahmen der Erfindung wurde festgestellt, dass es besonders vorteilhaft ist, die Temperierungsvorrichtung unmittelbar stromauf zum Kraftstoffhochdruckbereich anzuordnen. Beispielsweise kann die Temperierungsvorrichtung so angeordnet werden, dass der Abstand vom Kraftstoffauslass der Temperiervorrichtung zu dem Kraftstoffhochdruckbereich kleiner als 20 cm ist und/oder dass der Abstand vom Kraftstoffauslass der Temperiervorrichtung von einer Kraftstoffhochdruckpumpe eines Common-Rail-Systems kleiner als 20 cm ist. Dadurch können die vorgenannten Temperatureinflüsse der Brennkraftmaschine zuverlässig vermieden werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild einer Temperierungsvorrichtung gemäß einer Ausführungsform der Erfindung;
- Figur 2: eine Schnittansicht des Temperierkörpers, in dem die erste Temperierungsstrecke verläuft, gemäß einer Ausführungsform der Erfindung;
- Figuren 3A bis 3E: die Regelung der Kraftstofftemperatur auf eine Solltemperatur mit der erfindungsgemäßen Temperierungsvorrichtung für jeweils verschiedene Betriebszustände; und
- Figuren 4A, 4B und 4C: schematisch die Verschaltung einzelner Peltierelemente zur einer Peltiervorrichtung.

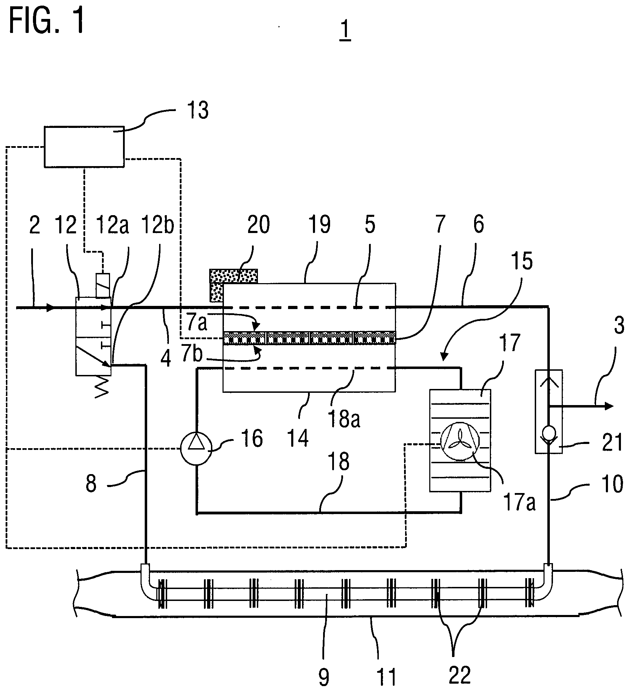

Figur 1 zeigt ein schematisches Blockschaltbild einer Temperierungsvorrichtung 1 gemäß einer Ausführungsform der Erfindung. Die Temperierungsvorrichtung 1 kann als eigenständige, einbaufertige Einheit zum Einbau in ein Kraftstoffversorgungssystem ausgebildet sein oder als integraler Bestandteil einer größeren Baugruppe ausgeführt sein.

Die Temperierungsvorrichtung 1 ist stromab der Kraftstoffpumpe, des Kraftstofffilters und ggf. eines Druckreglers im Niederdruckbereich des Kraftstoffversorgungssystems angeordnet und in der Nähe der Kraftstoffhochdruckpumpe eines Common-Rail-Systems. Die Temperierungsvorrichtung 1 dient sowohl zur Kühlung als auch zur Erwärmung des Kraftstoffes. Hierzu weist die Temperierungsvorrichtung 1 einen Kraftstoffeinlass 2, welcher beispielsweise mit einem Kraftfahrzeugtank oder einer Vorpumpe (beides nicht dargestellt) verbunden ist, und einen Kraftstoffauslass 3, welcher mit der Saugseite der Kraftstoffhochdruckpumpe des Common-Rail-Systems (beides nicht dargestellt) strömungstechnisch verbunden ist, auf.

Die Temperierungsvorrichtung 1 umfasst ferner ein elektrisch ansteuerbares 3/2-Niederdruck-Magnetventil 12, das eingangsseitig mit dem Kraftstoffeinlass verbunden ist. Das 3/2-Niederdruck-Magnetventil 12 verfügt ferner über einen ersten Ausgang 12a, der strömungstechnisch mit einem ersten Strömungszweig 4, 5, 6 zur Führung des Kraftstoffes verbunden ist, und einen zweiten Ausgang 12b, der strömungstechnisch mit einem zweiten Strömungszweig 8, 9, 10 zur Führung des Kraftstoffes verbunden ist. Die beiden Strömungszweige sind endseitig strömungstechnisch mit einem Wechselventil 21 verbunden, das je nach Schaltstellung den ersten oder den zweiten Strömungszweig mit dem Kraftstoffauslass 3 verbindet. In der ersten Schaltstellung verbindet das 3/2-Niederdruck-Magnetventil 12 den Kraftstoffeinlass 2 mit dem ersten Strömungszweig 4, 5, 6, und in der zweiten Schaltstellung verbindet das 3/2-Niederdruck-Magnetventil 12 den Kraftstoffeinlass 2 mit dem zweiten Strömungszweig 8, 9, 10.

Vorstehend wurde bereits erwähnt, dass anstatt eines 3/2-Niederdruck-Magnetventils 12 auch ein Proportional-Ventil verwendet werden kann, welches einen stufenlosen Übergang der Ausgänge in den ersten Strömungszweig und den zweiten Strömungszweig ermöglicht. Bei dieser Variante entfiele das Takten und relativ häufige Umschalten eines konventionellen Magnet-Umschaltventils 12, welches keinen dosierten Strömungsübergang der beiden Ausgänge zulässt.

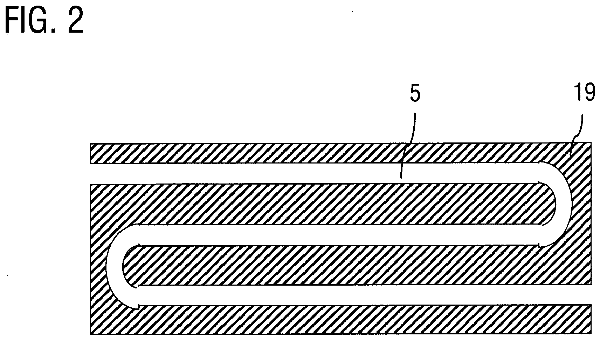

Der erste Strömungszweig 4, 5, 6 enthält eine Temperierungsstrecke 5 für den Kraftstoff, die mit einer Peltiervorrichtung 7 thermisch gekoppelt ist. Die in Figur 1 lediglich schematisch angedeutete Temperierungsstrecke 5 ist in Figur 2 detaillierter dargestellt. Die Temperierungsstrecke 5 ist als Leitungskanal in einem Temperierkörper 19, z. B. in Form eines Materialblocks, ausgebildet, wobei der Temperierkörper aus einem thermisch hoch leitfähigen Material, z. B. Aluminium, ausgeführt ist und zugleich chemisch resistent gegen den verwendeten Kraftstoff ist. Um eine möglichst effektive Kühlung des Kraftstoffs zu erreichen, ist die Temperierungsstrecke 5 in dem Temperierkörper 19 mäanderförmig verlaufend ausgebildet.

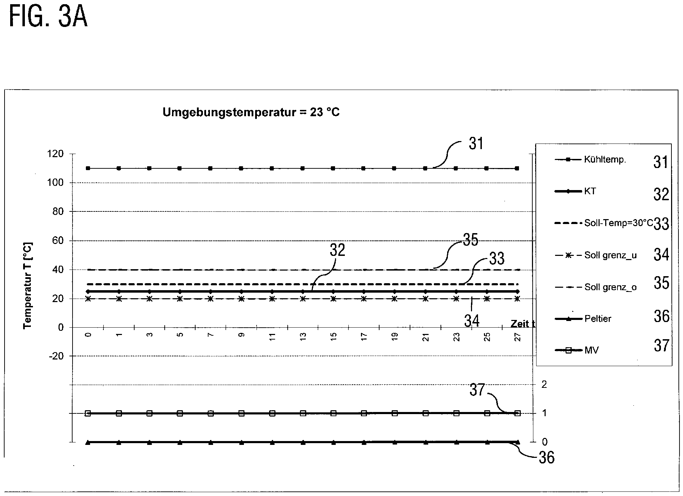

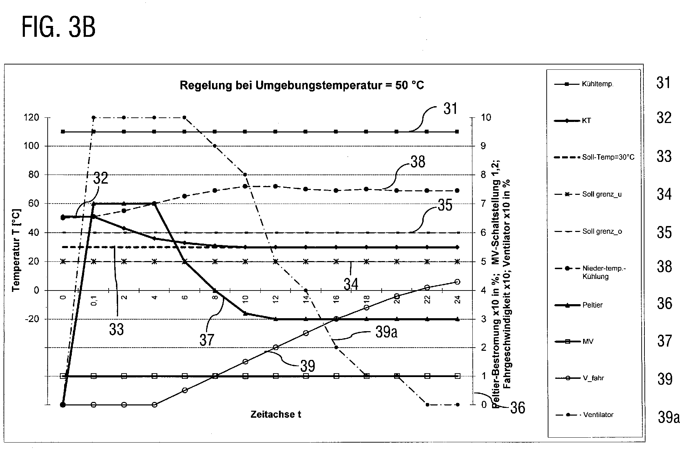

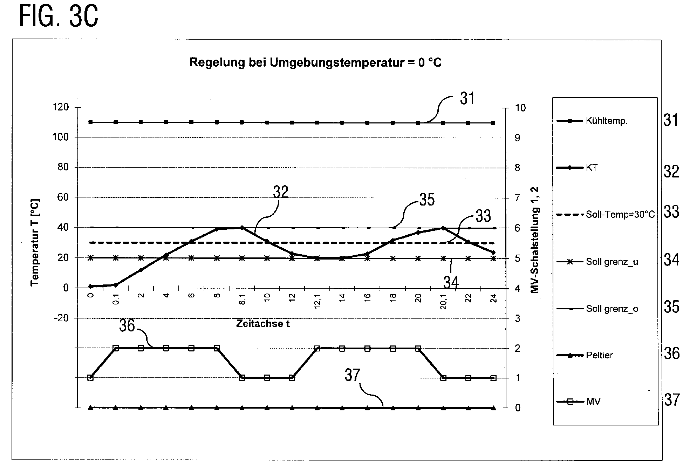

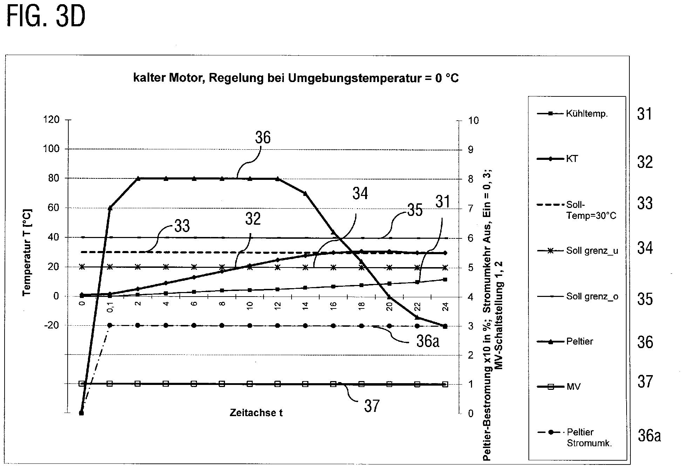

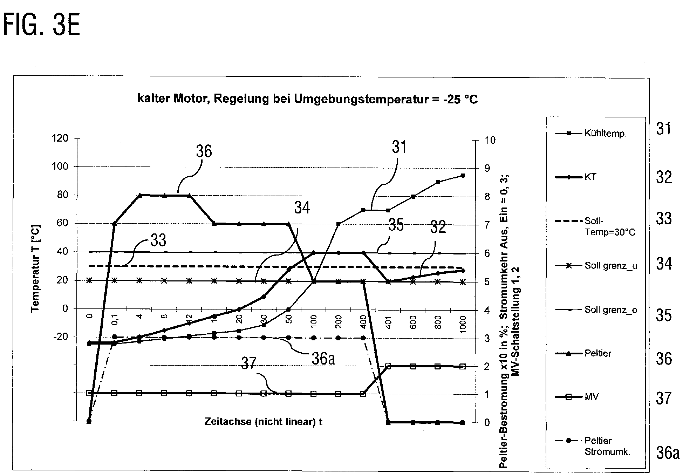

Der Temperierkörper 19 ist mit seiner Unterseite thermisch an die Peltiervorrichtung 7 gekoppelt, welche im Normalbetrieb, d. h. bei betriebswarmen Motor, was nachfolgend in Bezug auf die Figur 3 noch detaillierter erläutert wird, so beschaltet bzw. bestromt ist, dass die Kühlseite 7a der Peltiervorrichtung 7 mit dem Temperierkörper 19 unmittelbar aneinanderliegend thermisch kontaktiert. Optional kann zwischen Kühlseite 7a und Temperierkörper 19 auch eine Wärmeleitpaste eingebracht sein.

Die Warmseite 7b der Peltiervorrichtung 7 ist zum Zwecke des Abtransports von Wärme ebenfalls mit einem Temperierkörper 14 verbunden, der ebenfalls aus einem thermisch hoch leitfähigen Material ausgeführt ist. Um die Wärmeableitung zu fördern, sind die Warmseite 7b der Peltiervorrichtung 7 bzw. der Temperierkörper 14 mit einem von einem Kühlfluid durchströmbaren Niedertemperaturkühlkreislauf 15 thermisch gekoppelt. Der Niedertemperaturkühlkreislauf 15 umfasst einen Kühlfluidkanal 18, 18a, in dem das Kühlfluid zirkulieren kann, eine Pumpe 16 zum Umwälzen des Kühlfluids im Niedertemperaturkühlkreislauf und einen Niedertemperaturkühler 17. Der Niedertemperaturkühler kann luftdurchströmte Kühlrippen aufweisen und optional mit einem Ventilator 17a versehen sein, um den Abtransport der Wärme zu verstärken. Der im Temperierkörper 14 verlaufende Abschnitt 18a des Kühlfluidkanals 18 ist ebenfalls mäanderförmig ausgebildet (wiederum in Figur 1 nicht dargestellt).

Um die Peltiervorrichtung 7 vor Motor- und Fahrzeugschwingungen zu schützen, kann diese optional schwindungsgedämpft gelagert sein, z. B. in Gummiblöcken. Ferner kann die Temperierungsvorrichtung vollständig oder zumindest teilweise von einer thermischen Isolierung 20 umgeben sein, was in Figur 1 lediglich angedeutet ist. Hierbei kann auch die Leitungsführung bis zur Hochdruckpumpe isoliert sein.

Der zweite Strömungszweig 8, 9, 10 enthält ebenfalls eine Temperierungsstrecke 9 für den Kraftstoff, die mit einem Kühlkreislauf 11 einer Brennkraftmaschine des Kraftfahrzeugs thermisch gekoppelt ist. Mit dem Bezugszeichen 11 ist in Figur 1 ein Abschnitt des Motorkühlkreislaufs bezeichnet, in den die Temperierungsstrecke 9 eingebracht ist. Die Temperierungsstrecke 9 ist somit ein Kraftstoffleitungsabschnitt 9, der vom Kühlfluid der Motorkühlung, das bei einem betriebswarmen Motor von der Motorabwärme erwärmt ist, geheizt wird. Der Kraftstoffleitungsabschnitt 9 kann optional zusätzlich verrippte Abschnitte 22 aufweisen, um eine schnellere Erwärmung des Kraftstoffes zu erzielen.

Der Kraftstoff kann somit je nach Schaltstellung des Steuerventils 12 wahlweise über den ersten Strömungszweig 4,5,6 bzw. zur Temperierungsstrecke 5 geleitet werden, um mit der Peltiervorrichtung gekühlt (oder ggf. auch erwärmt) zu werden, oder über den zweiten Strömungszweig 8, 9, 10 bzw. zur Temperierungsstrecke 9 geleitet werden, um über den Kühlkreislauf des Motors, der mit Abwärme des Motors beaufschlagt ist, erwärmt zu werden. Dadurch kann schnell zwischen einem Kühl- und einem Heizbetrieb hin- und hergewechselt werden.

Die Länge der Aufheizstrecke ist so gewählt, dass bei betriebswarmem Motor im Winterdauerbetrieb eine zusätzliche stromintensive Aufheizung durch die Peltiervorrichtung 7 nicht mehr erforderlich wird. Zudem sollte der Wärmetauschereffekt, der durch die Länge der Temperierungsstrecke 9 mit Art und Anzahl der verrippten Abschnitte 22 des kraftstoffführenden Rohres bestimmt wird, so abgestimmt bzw. begrenzt sein, dass bei konstanter Fahr- und Motorlast der Kraftstoff-Solltemperaturbereich auch ohne Takten des Umschaltventils möglichst häufig eingehalten werden kann.

Zur Steuerung der Temperierungsvorrichtung 1 weist diese eine Steuereinrichtung 13 auf, die beispielsweise als Mikroprozessor ausgebildet ist und die über Steuerleitungen (in Figur 1 durch gepunktete Linien dargestellt) mit der Peltiervorrichtung 7 und dem Steuerventil 12 verbunden ist. Das hydraulisch folgende Wechselventil 21 hält bei Leitungsbruch in einem Strömungszweig den anderen Strömungszweig dicht. Für die grundsätzliche Funktion der Temperierungseinrichtung ist das Wechselventil 21 aber nicht zwingend erforderlich. Die Steuereinrichtung 13 schaltet das Steuerventil 12 in die erste oder zweite Stellung, steuert die Bestromung der Peltiervorrichtung 7. Korrespondierend zu der Schaltstellung des Steuerventils 12 wird das Wechselventil 21 in eine erste oder zweite Stellung geschoben. Die Steuereinrichtung 13 steuert ferner die Pumpe 16 und den Ventilator 17a, dargestellt ebenfalls durch die gepunkteten Signalleitungen.

Die Steuereinrichtung 13 ist ausgeführt, zwei unterschiedliche Betriebsmodi durchzuführen: einen ersten Betriebsmodus, der bei betriebswarmen Motor ausgeführt wird, und einen zweiten Betriebsmodus, der bei kaltem Motor oder einem warmlaufenden Motor ausgeführt wird.

Bei kaltem oder einem warmlaufenden Motor ist die Motorkühlflüssigkeit mit nicht genügend Motorabwärme beaufschlagt, um den Kraftstoff erwärmen oder zumindest ausreichend schnell erwärmen zu können. Ob ein betriebswarmer Motor vorliegt, kann z. B. in an sich bekannter Weise durch die Messung der Temperatur des Motorkühlfluids gemessen werden. Überschreitet die Temperatur des Motorkühlfluids einen vorbestimmten Schwellenwert, ist der Motor betriebswarm.

Die Steuereinrichtung 13 vergleicht fortlaufend die aktuelle vor der Kraftstoffhochdruckpumpe herrschende Kraftstofftemperatur mit einem vorgegebenen Sollwert der Kraftstofftemperatur, der zweckmäßig kraftfahrzeugtypspezifisch festgelegt werden kann. Die aktuelle Temperatur des Kraftstoffes wird von einem Kraftstofftemperatursensor gemessen, der beispielsweise im Kraftstofftank angeordnet sein kann. Ferner wird die aktuelle Umgebungstemperatur bestimmt, die z. B. angibt, inwieweit die Umgebungsluft zur Kühlung des Kraftstoffes beitragen kann.

Die Figuren 3A bis 3E illustrieren für den Fall eines betriebswarmen Motors beispielhaft die Regelung der Kraftstofftemperatur auf eine Solltemperatur anhand verschiedener Betriebszustände. Die zeitlichen Verläufe gleicher Größen sind in allen Figuren mit denselben Bezugszeichen bezeichnet und werden nicht gesondert beschrieben. In den Figuren 3A bis 3E gibt die Abszissenachse die Zeitachse und die linke Ordinatenachse die Temperatur an. Der Kurvenverlauf 31 gibt den zeitlichen Verlauf der Temperatur der Motorkühlflüssigkeit an. Die Steuereinrichtung 13 ist eingerichtet, die Kraftstofftemperatur (KT) 32 auf einen vorgegebenen Sollwert 33 von z. B. 30 °C einzuregeln, wobei ein unterer Grenzwert 34 und ein oberer Grenzwert 35 der Kraftstofftemperatur eingehalten werden soll. Die Kraftstofftemperatur 32 soll sich somit innerhalb der Grenzwerte 34, 35 und möglichst nahe am Sollwert 33 befinden. Auf der rechten Ordinatenachse können die Werte für den zeitlichen Verlauf der Bestromung der Peltiervorrichtung 7 (Kurve mit Bezugszeichen 36) sowie die Schaltstellung des Magnetventils 12 (Kurve mit Bezugszeichen 37) abgelesen werden.

Die Figuren 3A bis 3C illustrieren für den Fall eines betriebswarmen Motors beispielhaft die Regelung der Kraftstofftemperatur auf eine Solltemperatur anhand verschiedener Betriebszustände.

Figur 3A illustriert eine Betriebssituation bei einer Umgebungstemperatur von 23 °C. Die aktuell gemessene Kraftstofftemperatur 32 liegt nur geringfügig über der Umgebungstemperatur und entspricht fast dem Sollwert 33 bzw. liegt im definierten Soll-Regelbereich 34, 35. Somit ist aktuell kein Regeleingriff notwendig. Alle elektrischen Komponenten der Temperierungsvorrichtung bleiben stromlos, insbesondere das Magnetventil 12 befindet sich stromlos in Stellung 1, was durch den Wert 1 der rechten Ordinatenachse angezeigt ist. Die Peltiervorrichtung 7 ist ebenfalls stromlos geschaltet (angezeigt durch den Wert 0 der rechten Ordinatenachse), so dass diese keine Kühlwirkung entfaltet.

Figur 3B illustriert eine Betriebssituation bei einer Umgebungstemperatur von 50 °C. Die gemessene Kraftstofftemperatur 32 ist anfänglich zu hoch und liegt über dem oberen Sollgrenzwert 35. Die Steuervorrichtung 13 hat das Magnetventil in die Stellung 1 geschaltet. Die Peltiervorrichtung 7 wird stark als Kühlvorrichtung bestromt. Hierbei gibt die Kurve 36 wiederum die Peltierbestromung an, deren Höhe auf der rechten Ordinatenachse ablesbar ist. Hierbei zeigen die Werte der rechten Ordinatenachse multipliziert mit 10 die aktuelle Bestromung in % der maximalen Nennspannung der Peltiervorrichtung 7 an. Zu Beginn wird die Peltiervorrichtung 7 mit 70 % bestromt, so dass die Kraftstofftemperatur 32 bedingt durch die Peltierkühlung abnimmt. Im Zeitpunkt 4 ist die Kraftstofftemperatur 32 wieder unter die obere Sollgrenze 35 gefallen. Daraufhin wird die Peltierbestromung langsam auf 30% zurückgefahren. Gleichzeitig zum Bestromungsbeginn der Peltiervorrichtung bestromt die Steuereinrichtung 13 die Pumpe 16 des Niedertemperaturkühlkreislaufs 15, der sich durch die Abwärme der Peltiervorrichtung 7 erwärmt, was durch die Kurve mit dem Bezugszeichen 38 dargestellt ist. Ferner schaltet die Steuereinrichtung 13 den Ventilator 17a zu. Der Ventilatorbetrieb ist durch die Kurve mit dem Bezugszeichen 39a dargestellt, wobei die Werte der rechten Ordinatenachse multipliziert mit 10 die aktuelle Ventilatorleistung in % der Gesamtleistung angeben. Im dargestellten Diagramm 3B fährt das Fahrzeug an, und der den Niedertemperaturkühler 17 kühlende Fahrtwind nimmt mit zunehmender Fahrgeschwindigkeit 39 zu, womit der Ventilator 17a mehr und mehr abgeschaltet wird. Die Ordinatenwerte der rechten Ordinatenachse, die der Kurve 39 zugeordnet sind, multipliziert mal 10, geben die Fahrgeschwindigkeit in km/h an.

Figur 3C illustriert eine Betriebssituation bei einer Umgebungstemperatur von 0 °C. Die gemessene Kraftstofftemperatur 32 ist anfänglich zu niedrig und liegt unterhalb des unteren Sollgrenzwerts 34 nahe bei 0 °C. Folglich wird das Magnetventil 12 in Stellung 2 geschaltet, dargestellt durch die Kurve 36. Die Werte 1 und 2 auf der rechten Ordinatenachse geben die Schaltstellung an. Im Schaltzustand 2 wird der nun durch den zweiten Strömungszweig 8, 9, 10 fließende Kraftstoff in der Temperierungsstrecke 9 mit Abwärme vom Motor aus dem Motorkühlkreislauf beaufschlagt und dadurch erwärmt. Die Peltiervorrichtung 7 ist stromlos geschaltet. Gleiches gilt für die Pumpe 16.

Sobald die Kraftstofftemperatur 32 den oberen Sollgrenzwert 35 erreicht, wird das Magnetventil 12 in Stellung 1 stromlos geschaltet und der Kraftstoff so in den ersten Strömungszweig geleitet. Aufgrund der niedrigen Umgebungstemperatur ist keine Kühlung mit der Peltiervorrichtung 7 notwendig. Der Kraftstoff wird im ersten Strömungszweig durch die Umgebungstemperatur gekühlt. Fällt die Kraftstofftemperatur 32 wieder unter den unteren Sollgrenzwert 34, wird das Magnetventil wieder in Stellung 2 geschaltet, usw..

Stellt die Steuereinrichtung 13 fest, dass ein kalter oder warmlaufender Motor vorliegt, wird ein zweiter Betriebsmodus durchgeführt.

Zum Kühlen des Kraftstoffes können analog die gleichen Schritte wie im ersten Betriebsmodus durchgeführt werden, d. h. das Steuerventil 12 wird in die erste Stellung geschaltet und die Peltiervorrichtung so bestromt, dass die Seite 7a die Kaltseite ist.

Unterschreitet die Kraftstofftemperatur jedoch den vorgegebenen Sollwert, bleibt das Steuerventil 12 in der ersten Stellung. Die Steuereinrichtung 13 steuert die Peltiervorrichtung 7 nun mit Stromumkehr an, d. h. durch Umpolung der angelegten Spannung, so dass diese als Heizaggregat bestromt wird. Das bedeutet, dass nun die Seite 7a die Warmseite ist, über die der durch die Temperierungsstrecke 5 fließende Kraftstoff erwärmt werden kann. Dies ermöglicht die schnelle Erwärmung des Kraftstoffs, wenn während der Kaltstartphase und Warmlaufphase des Motors im Motorkühlkreislauf noch keine oder nicht genügend Abwärme vorhanden ist, um den Kraftstoff über die zweite Temperierungsstrecke zu erwärmen.

Die Figuren 3D bis 3E illustrieren für den Fall eines kalten Motors beispielhaft den zweiten Betriebsmodus anhand verschiedener Betriebszustände.

Figur 3D stellt die Temperaturregelung beispielhaft bei einem kalten Motor und einer Umgebungstemperatur von 0 °C dar. Die Temperatur im Kühlkreislauf des Motors (Kurve 31) liegt anfangs ebenfalls bei 0 °C und erwärmt sich nach Motorstart erst langsam.

Die gemessene Kraftstofftemperatur 32 liegt anfänglich ebenfalls bei ca. 0 °C und ist zu niedrig. Da aber der Kühlkreislauf zu kalt ist, um den Kraftstoff zu erwärmen, bleibt das Magnetventil 12 in Stellung 1. Die Peltiervorrichtung 7 wird mit Stromumkehr zuerst stark bestromt und dient nun als Heizvorrichtung, wie vorstehend beschrieben. Die Kurve 36a zeigt bei einem Wert 3 der rechten Ordinatenachse eine Stromumkehr an. Sobald die Kraftstofftemperatur 32 wieder den Sollbereich 34, 35 erreicht, wird die Bestromung der Peltiervorrichtung 7 so weit reduziert, dass die Solltemperatur 33 gehalten werden kann.

Weil die Kaltstartphase an der Gesamtlaufdauer des Motors nur einen sehr geringen Anteil hat, können die Peltierelemente etwas stärker bestromt werden, z. B. bis 80% statt 70% der Nennspannung.

Erst zu einem späteren Zeitpunkt, z. B. nach 5 bis 10 Minuten, wird die Temperatur im Motorkühlkreislauf so weit angestiegen sein, dass die Kraftstofferwärmung über den Wärmetauscher, MV-Stellung 2, vorgenommen werden kann (in Figur 3D nicht dargestellt). Dann entspricht die Regelung der beim warmen Motor.

Figur 3E zeigt eine ähnliche Betriebssituation wie in Figur 3D. Die Besonderheit liegt nun darin, dass die gemessene Kraftstofftemperatur 32 anfänglich viel zu niedrig ist und bei unter -20 °C liegt. Der zeitliche Verlauf wurde zur besseren Darstellbarkeit unter Verwendung einer nicht-linearen Zeitachse dargestellt. Zur Erwärmung des Kraftstoffes wird das Magnetventil wieder in die Stellung 1 geschaltet und die Peltiervorrichtung 7 durch Stromumkehr als Heizvorrichtung bestromt. Wegen der längeren erforderlichen Erwärmungsphase durch die Peltiervorrichtung 7 ist die stärkste Bestromung der Peltiervorrichtung 7 zeitlich zu begrenzen, um eine vorzeitige Alterung der Peltiervorrichtung 7 sicher zu vermeiden. Wie in Figur 3E gezeigt, wird die Peltiervorrichtung 7 (Kurve 36) zunächst mit 80% der Nennspannung der Peltiervorrichtung bestromt, danach wird die Bestromung schrittweise zurückgefahren.

Im Zeitpunkt t = 400 erreicht die Kraftstofftemperatur den unteren Sollgrenzwert 34. Zu diesem Zeitpunkt ist die Temperatur im Motorkühlkreislauf bereits so weit angestiegen, dass die Kraftstofferwärmung über die zweite Temperierstrecke 18a vorgenommen werden kann. Folglich wird das Magnetventil in Stellung 2 geschaltet und der Kraftstoff in den zweiten Strömungszweig geleitet. Die Peltiervorrichtung 7 wird stromlos geschaltet.

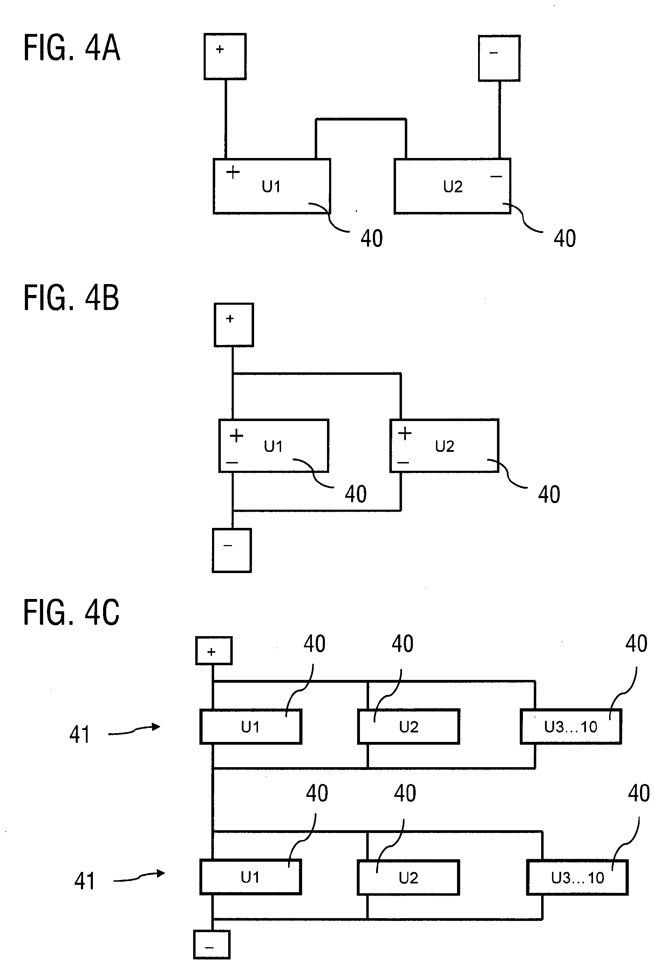

Die Figuren 4A bis 4C illustrieren schematisch die Verschaltung einzelner Peltierelemente zu einer Peltiervorrichtung 7.

Die Peltiervorrichtung 7 arbeitet unter Ausnutzung des Peltiereffekts, wobei durch Anlegen einer elektrischen Spannung an die Peltiervorrichtung diese als Kühlaggregat oder bei Umpolung der elektrischen Spannung auch als Heizaggregat einsetzbar ist. Damit ist eine einfach umsetzbare Temperierung des Kraftstoffes möglich, wenn dessen Temperatur oberhalb oder unterhalb einer Solltemperatur liegt.

Die Peltiervorrichtung 7 kann aus einzelnen handelsüblichen Peltierelementen 40 aufgebaut sein, welche üblicherweise eine quaderförmige Form aufweisen und für die berechnete Kühlstrecke geometrisch nebeneinander aufgereiht und verdrahtet werden. Der Wärmeübergang zu dem Temperierkörper 19 wird durch geeignete Flächenpressung und ggf. durch Aufbringen einer Wärmeleitpaste sichergestellt.

Die einzelnen Peltierelemente 40 werden so in Reihe und/oder parallel geschaltet, dass die vom Fahrzeugbordnetz bereitgestellte Spannung, in der Regel 12V oder 24V, im angestrebten Arbeitsbereich der Peltiervorrichtung 7 liegt.

Figur 4A zeigt ein vereinfachtes Beispiel, in dem zwei Peltierelemente 40 in Reihe geschaltet sind. Wenn z. B. die Bordnetzspannung 12 V wäre, würde ein einzelnes Peltierelement 40, falls diese für 8V ausgelegt wäre, durchbrennen. Zwei in Reihe geschaltete Peltierelemente 40 können jedoch mit bis zu 16V beaufschlagt werden.

Figur 4B zeigt beispielhaft eine parallele Verschaltung zweier Peltierelemente 40.

Figur 4C zeigt eine beispielhafte Ausgestaltungsform der Peltiervorrichtung 7, die aus 20 Peltiereinzelelementen 40 besteht, wobei jeweils 10 Peltierelemente zu einer Anordnung 41 parallel verschalteter Peltierelemente verschaltet sind. Die beiden Anordnungen 41 sind dann in Reihe geschaltet. Bei einer Auslegung der einzelnen baugleichen Peltierelemente 40 für maximal 8V könnte die Gesamtanordnung somit aufgrund der Reihenschaltung mit 16V Nennspannung beaufschlagt werden. Bei einer Bordnetzspannung von 12V ergibt sich eine Auslastung jedes einzelnen Peltierelements 40 von 75% (12V/16V = 75%). Bei 8V Peltier-Nennspannung wird jedes Peltierelement somit mit maximal 8*0.75 = 6V betrieben.

Je nach Abweichung der aktuellen Kraftstofftemperatur von der Solltemperatur kann die Spannung an den einzelnen Peltierelementen dann nach Bedarf auf kleinere Werte, z. B. 5, 4, 3, ... Volt herunter geregelt werden, z. B. durch eine hierfür übliche PWM(Pulsweitenmodulation)-Schaltung.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Temperierungsvorrichtung
- 2: Kraftstoffeinlass
- 3: Kraftstoffauslass
- 4, 5, 6: Kraftstoffleitungen des ersten Strömungszweigs
- 7: Peltiervorrichtung
- 7a: Kaltseite im Normalbetrieb der Peltiervorrichtung
- 7b: Warmseite im Normalbetrieb der Peltiervorrichtung
- 8, 9, 10: Kraftstoffleitungen des zweiten Strömungszweigs
- 11: Teilabschnitt des Motorkühlkreislaufs
- 12: 3/2-Magnetventil
- 12a: Erster Ausgang
- 12b: Zweiter Ausgang
- 13: Steuereinrichtung
- 14: Temperierkörper
- 15: Niedertemperaturkühlkreislauf
- 16: Pumpe
- 17: Niedertemperaturkühler
- 17a: Ventilator
- 18, 18a: Kühlfluidkanal
- 19: Temperierkörper
- 20: Isolierung
- 21: Wechselventil
- 22: Verrippung
- 31: Kühltemperatur
- 32: Kraftstofftemperatur
- 33: Kraftstoffsolltemperatur
- 34: Untere Sollgrenztemperatur
- 35: Obere Sollgrenztemperatur
- 36: Bestromung der Peltiervorrichtung
- 36a: Bestromungsrichtung der Peltierelemente
- 37: Schaltstellung des Magnetventils
- 38: Temperatur des Niedertemperaturkühlkreislaufs
- 39: Fahrgeschwindigkeit
- 39a: Ventilatorleistung
- 40: Peltierelemente
- 41: Parallele Anordnung von Peltierelementen

## Patentansprüche

1. Temperierungsvorrichtung (1) für ein Kraftstoffversorgungssystem eines Kraftfahrzeugs, umfassend einen Kraftstoffeinlass (2), einen Kraftstoffauslass (3) und eine erste Temperierungsstrecke (5) zwischen Kraftstoffeinlass (2) und Kraftstoffauslass (3), die mit einer Peltiervorrichtung (7) thermisch gekoppelt ist, **gekennzeichnet durch**
eine zweite Temperierungsstrecke (9) zwischen Kraftstoffeinlass (2) und Kraftstoffauslass (3), die mit einem Kühlkreislauf (11) einer Brennkraftmaschine des Kraftfahrzeugs thermisch gekoppelt ist; und
ein schaltbares Steuerventil (12), das eingangsseitig mit dem Kraftstoffeinlass (2) verbunden ist und den Kraftstoffeinlass (2) in einer ersten Schaltstellung mit der ersten Temperierungsstrecke (5) und in einer zweiten Schaltstellung mit der zweiten Temperierungsstrecke (9) verbindet.

2. Temperierungsvorrichtung nach Anspruch 1, **gekennzeichnet durch** eine Steuereinrichtung (13), die ausgebildet ist, das schaltbare Steuerventil (12) und die Peltiervorrichtung (7) zum Einregeln der Kraftstofftemperatur auf einen vorgegebenen Sollwert und/oder Sollwertbereich anzusteuern, wobei die Steuereinrichtung (13) ausgeführt ist, bei betriebswarmer Brennkraftmaschine
(a) zur Reduzierung der Kraftstofftemperatur das Steuerventil (12) in die erste Schaltstellung zu schalten und die Peltiervorrichtung (7) als Kühlvorrichtung zu bestromen oder, falls die Umgebungstemperatur einen vorbestimmten Schwellenwert unterschreitet, stromlos zu schalten; und
(b) zur Erhöhung der Kraftstofftemperatur das Steuerventil (12) in die zweite Schaltstellung zu schalten.

3. Temperierungsvorrichtung nach Anspruch 1 oder 2, **dadurch gekennzeichnet, dass** die Steuereinrichtung (13) ausgeführt ist, bei kalter Brennkraftmaschine zur Erhöhung der Kraftstofftemperatur das Steuerventil (12) in die erste Schaltstellung zu schalten und die Peltiervorrichtung (7) mit Stromumkehr als Heizaggregat zu bestromen.

4. Temperierungsvorrichtung nach einem der vorhergehenden Ansprüche, **dadurch gekennzeichnet, dass** an der im Kühlbetrieb warmen Seite (7b) der Peltiervorrichtung (7) ein Temperierkörper (14) angeordnet ist, der mit einem von einem Kühlfluid durchströmbaren Niedertemperaturkühlkreislauf (15) thermisch gekoppelt ist.

5. Temperierungsvorrichtung nach Anspruch 4, **dadurch gekennzeichnet, dass** der Niedertemperaturkühlkreislauf (15) eine Pumpe (16), einen Niedertemperaturkühler (17) und eine Kühlfluidkanalführung aufweist, wobei ein im Temperierkörper (14) verlaufender Abschnitt (18a) der Kühlfluidkanalführung (18) vorzugsweise mäanderförmig, schlangenförmig und/oder zickzackförmig verlaufend ausgebildet ist.

6. Temperierungsvorrichtung nach einem der vorhergehenden Ansprüche, **dadurch gekennzeichnet,**
(a) **dass** das schaltbare Steuerventil (12) ein elektrisch ansteuerbares 3/2-Niederdruck-Magnetventil oder ein 3/2-Niederdruck-Proportional-Magnetventil ist; und/oder
(b) **dass** die Steuereinrichtung ausgeführt ist, die Bestromung der Peltiervorrichtung zu steuern, derart, dass eine Stärke der Bestromung der Peltiervorrichtung (7) mit zunehmender Abweichung der Kraftstofftemperatur von dem vorgegebenen Sollwert zunimmt.

7. Temperierungsvorrichtung nach einem der vorhergehenden Ansprüche, **dadurch gekennzeichnet,**
(a) **dass** die erste Temperierungsstrecke (5) in einem Temperierkörper (19) aus wärmeleitfähigem Material verläuft, der an der im Kühlbetrieb kalten Seite (7a) der Peltiervorrichtung (7) angeordnet ist; und/oder
(b) **dass** die erste Temperierungstrecke (5) mäanderförmig, schlangenförmig und/oder zickzackförmig verlaufend ausgebildet ist.

8. Temperierungsvorrichtung nach einem der vorhergehenden Ansprüche, **dadurch gekennzeichnet,**
(a) **dass** die Temperiervorrichtung zumindest teilweise von einer thermischen Isolierung (20) umgeben ist; und/oder
(b) **dass** die Peltiervorrichtung (7) zum Schutz vor Fahrzeug- und/oder Motorschwingungen schwingungsgedämpft gelagert ist.

9. Kraftfahrzeug, insbesondere Nutzfahrzeug mit einer Temperiervorrichtung (1) nach einem der vorhergehenden Ansprüche, die im Niederdruckbereich stromab zu einer Kraftstoffpumpe angeordnet ist.

10. Kraftfahrzeug nach Anspruch 9, **dadurch gekennzeichnet,**
(a) **dass** der Abstand vom Kraftstoffauslass der Temperiervorrichtung zu dem Kraftstoffhochdruckbereich kleiner als 20 cm ist; und/oder
(b) **dass** der Abstand vom Kraftstoffauslass der Temperiervorrichtung zu einer Kraftstoffhochdruckpumpe eines Common-Rail-Systems kleiner als 20 cm ist.

## Claims

1. Tempering device (1) for a fuel supply system of a motor vehicle, comprising a fuel inlet (2), a fuel outlet (3) and a first tempering section (5) between the fuel inlet (2) and fuel outlet (3) which is thermally coupled to Peltier module (7), **characterized by**
a second tempering section (9) between the fuel inlet (2) and fuel outlet (3) which is thermally coupled to a cooling circuit (11) of an internal combustion engine of a motor vehicle, and
a switchable control valve (12) which is connected on the input side to the fuel inlet (2) and in a first switch position connects the fuel inlet (2) to the first tempering section (5) and in a second switch position to the second tempering section (9).

2. Tempering device according to Claim 1, **characterized by** a control device (13) which is configured to control the switchable control valve (12) and the Peltier module (7) for regulating the fuel temperature to a predefined nominal value and/or nominal value range, wherein the control device (13) is configured, when the internal combustion engine is warm,
(a) in order to reduce the fuel temperature, to switch the control valve (12) to the first switch position and power the Peltier module (7) as a cooling device, or if the ambient temperature falls below a predefined threshold value, to switch it to powerless; and
(b) in order to increase the fuel temperature, to switch the control valve (12) to the second switch position.

3. Tempering device according to Claim 1 or 2, **characterized in that** the control device (13) is configured, in order to increase the fuel temperature on a cold internal combustion engine, to switch the control device (12) to the first switch position and power the Peltier module (7) as a heating apparatus by current reversal.

4. Tempering device according to any of the preceding claims, **characterized in that** on the side (7b) of the Peltier module (7) which is warm in cooling mode, a tempering body (14) is arranged which is thermally coupled to a low-temperature cooling circuit (15) through which a cooling fluid can flow.

5. Tempering device according to Claim 4, **characterized in that** the low-temperature cooling circuit (15) has a pump (16), a low-temperature cooler (17) and a cooling fluid channel guide, wherein a portion (18a) of the cooling fluid channel guide (18) running in the tempering body (14) is configured preferably as a meander, snake and/or zig-zag pattern.

6. Tempering device according to any of the preceding claims, **characterized in that**
(a) the switchable control valve (12) is an electrically controllable, 3/2 way, low-pressure solenoid valve or a 3/2 way, low-pressure proportional solenoid valve; and/or
(b) the control device is configured to control the current to the Peltier device such that an intensity of the current to the Peltier device (7) increases on increasing deviation of the fuel temperature from the predefined nominal value.

7. Tempering device according to any of the preceding claims, **characterized in that**
(a) the first tempering section (5) runs in a tempering body (19) of heat-conductive material which is arranged on the side (7a) of the Peltier module (7) which is cold in cooling mode; and/or
(b) the first tempering section (5) is configured as a meander, snake and/or zig-zag pattern.

8. Tempering device according to any of the preceding claims, **characterized in that**
(a) the tempering device is surrounded at least partly by a thermal insulation (20); and/or
(b) the Peltier module (7) is mounted vibration-damped for protection from vehicle and/or engine vibrations.

9. Motor vehicle, in particular a utility vehicle, with a tempering device (1) according to any of the preceding claims which is arranged in the low-pressure region downstream of a fuel pump.

10. Motor vehicle according to Claim 9, **characterized in that**
(a) the distance from the fuel outlet of the tempering device to the high-pressure fuel region is less than 20 cm; and/or
(b) the distance from the fuel outlet of the tempering device to a high-pressure fuel pump of a common rail system is less than 20 cm.

## Revendications

1. Dispositif d'équilibrage des températures (1) pour un système d'alimentation en carburant d'un véhicule automobile, comprenant une entrée de carburant (2), une sortie de carburant (3) et une première section d'équilibrage des températures (5) entre l'entrée de carburant (2) et la sortie de carburant (3), qui est couplée thermiquement à un dispositif Peltier (7), **caractérisé par**
une seconde section d'équilibrage des températures (9) entre l'entrée de carburant (2) et la sortie de carburant (3), qui est couplée thermiquement à un circuit de refroidissement (11) d'un moteur à combustion interne du véhicule automobile; et
une vanne de distribution commutable (12), qui est raccordée côté entrée à l'entrée de carburant (2) et qui relie l'entrée de carburant (2) dans une première position de commutation à la première section d'équilibrage des températures (5) et dans une seconde position de commutation à la seconde section d'équilibrage des températures (9).

2. Dispositif d'équilibrage des températures selon la revendication 1, **caractérisé par** un dispositif de commande (13), qui est conçu pour commander la vanne de distribution commutable (12) et le dispositif Peltier (7) de façon à réguler la température du carburant sur une valeur de consigne et/ou une plage de valeurs de consigne prédéterminée, dans lequel le dispositif de commande (13) est configuré pour, lorsque le moteur à combustion interne est à la température de régime,
a) afin de réduire la température du carburant, commuter la vanne de distribution (12) dans la première position de commutation et activer le dispositif Peltier (7) comme dispositif de refroidissement ou, dans le cas où la température ambiante est inférieure à une valeur de seuil prédéterminée, la commuter sans courant; et
b) afin d'augmenter la température du carburant, commuter la vanne de distribution (12) dans la seconde position de commutation.

3. Dispositif d'équilibrage des températures selon la revendication 1 ou 2, **caractérisé en ce que** le dispositif de commande (13) est configuré de façon à, lorsque le moteur à combustion interne est froid, commuter la vanne de distribution (12) dans la première position de commutation et activer le dispositif Peltier (7) avec inversion du courant comme groupe de chauffage pour augmenter la température du carburant.

4. Dispositif d'équilibrage des températures selon l'une quelconque des revendications précédentes, **caractérisé en ce qu'**un corps d'équilibrage des températures (14), qui est couplé thermiquement à un circuit de refroidissement à basse température (15) pouvant être parcouru par un fluide de refroidissement, est disposé sur le côté chaud (7b) du dispositif Peltier (7) en fonctionnement de refroidissement.

5. Dispositif d'équilibrage des températures selon la revendication 4, **caractérisé en ce que** le circuit de refroidissement à basse température (15) présente une pompe (16), un refroidisseur à basse température (17) et un guidage en canal de fluide de refroidissement, dans lequel une partie (18a) du guidage en canal de fluide de refroidissement (18) s'étendant dans le corps d'équilibrage des températures (14) est réalisée de préférence sous forme sinueuse, en forme de serpentin et/ou en forme de zigzag.

6. Dispositif d'équilibrage des températures selon l'une quelconque des revendications précédentes, **caractérisé en ce que**
a) la vanne de distribution commutable (12) est une vanne magnétique à basse pression à 3/2 voies à commande électrique ou une vanne magnétique proportionnelle à basse pression à 3/2 voies; et/ou
b) le dispositif de commande est configuré de façon à commander l'activation du dispositif Peltier, de telle manière qu'une intensité du courant d'alimentation du dispositif Peltier (7) augmente avec l'augmentation de l'écart entre la température du carburant et la valeur de consigne prédéterminée.

7. Dispositif d'équilibrage des températures selon l'une quelconque des revendications précédentes, **caractérisé en ce que**
a) la première section d'équilibrage des températures (5) est réalisée dans un corps d'équilibrage des températures (19) en un matériau conducteur de la chaleur, qui est disposé sur le côté froid (7a) du dispositif Peltier (7) en fonctionnement de refroidissement; et/ou
b) la première section d'équilibrage des températures (5) est réalisée sous forme sinueuse, en forme de serpentin et/ou en forme de zigzag.

8. Dispositif d'équilibrage des températures selon l'une quelconque des revendications précédentes, **caractérisé en ce que**
a) le dispositif d'équilibrage des températures est entouré au moins partiellement d'une isolation thermique (20); et/ou
b) le dispositif Peltier (7) est monté de façon amortie contre les vibrations pour le protéger des vibrations du véhicule et/ou du moteur.

9. Véhicule automobile, en particulier véhicule utilitaire équipé d'un dispositif d'équilibrage des températures (1) selon l'une quelconque des revendications précédentes, qui est disposé dans la région de basse pression en aval d'une pompe à carburant.

10. Véhicule automobile selon la revendication 9, **caractérisé en ce que**
a) la distance entre la sortie de carburant du dispositif d'équilibrage des températures et la région de haute pression du carburant est inférieure à 20 cm; et/ou
b) la distance entre la sortie de carburant du dispositif d'équilibrage des températures et une pompe à carburant à haute pression d'un système de rampe commune est inférieure à 20 cm.
